## Europäisches Patentamt
## European Patent Office
## Office européen des brevets

(11) Veröffentlichungsnummer: **0 052 345**
**B2**

(12) **NEUE EUROPÄISCHE PATENTSCHRIFT**

(45) Veröffentlichungstag der neuen Patentschrift: **29.08.90**

(21) Anmeldenummer: **81109636.1**

(22) Anmeldetag: **11.11.81**

(51) Int. Cl.⁵: **H 02 K 29/00**

(54) **Rotationsenergiespeicher.**

(30) Priorität: **11.11.80 DE 8030107 u**

(43) Veröffentlichungstag der Anmeldung:
**26.05.82 Patentblatt 82/21**

(45) Bekanntmachung des Hinweises auf die Patenterteilung:
**14.05.86 Patenblatt 86/20**

(45) Bekanntmachung des Hinweises auf die Entscheidung über den Einspruch:
**29.08.90 Patentblatt 90/35**

(84) Benannte Vertragsstaaten:
**AT BE CH DE FR GB IT LI**

(56) Entgegenhaltungen:
**DE-A-2 209 353**
**DE-A-2 546 777**
**DE-A-2 811 282**
**DE-B-2 210 995**
**US-A-3 158 750**
**US-A-4 182 967**

**TX-Prospect "Reaction Wheels for Satellite Attitude Control, Type RSR"; 144 E/V 1.79 GD(20)**

(73) Patentinhaber: **Magnet-Motor Gesellschaft für magnetmotorische Technik mbH**
**Moosstrasse 14**
**D-8130 Starnberg (DE)**

(72) Erfinder: **Heidelberg, Götz, Dipl.-Phys.**
**Am Hügel 16**
**D-8136 Percha (DE)**

(74) Vertreter: **Klunker, Hans-Friedrich, Dr. et al**
**Patentanwälte Klunker . Schmitt-Nilson . Hirsch**
**Winzererstrasse 106**
**D-8000 München 40 (DE)**

EP 0 052 345 B2

**Beschreibung**

Die Erfindung bezieht sich auf einen Rotationsenergiespeicher gemäß Oberbegriff des Anspruchs 1.

Aus der DE-A-2 811 282 ist ein elektromotorisch angetriebenes Trägheitsrad bekannt, das auch als Rotationsenergiespeicher dienen kann. Dieser weist die im Oberbegriff des Anspruchs 1 angegebenen Merkmale auf.

Aus der US-A-3 158 750 ist ein Rotationsenergiespeicher bekannt, bei dem die Magnetfelder der Dauermagneten die einzelnen Wicklungsspulen in Axialrichtung durchsetzen und der magnetische Rückschluß der Dauermagnete lediglich radial außerhalb der Stromleiter erfolgt. Dieser bekannte Rotationsenergiespeicher ist funktionell auf die U-förmige Ausbildung der Dauermagnete mit axial gerichteten Polflächen angewiesen.

Die DE-A-2 209 353 zeigt demgegenüber zwar radial außerhalb der Statorspulen angeordnete Dauermagnete mit in Umfangsrichtung verlaufenden Polflächen. Der statorseitige Rückschluß ist jedoch konventionell über einen nicht mitrotierenden, ferromagnetischen Statorkern gebildet. Dieses Dokument zeigt also keine eisenlose Statorwicklung. — Analoges gilt für einen Rotationsenergiespeicher gemäß der US-A-4 182 967.

Die der Erfindung zugrundeliegende Aufgabe besteht darin, einen besonders verlustarmen Rotationsenergiespeicher mit einfacher Dauermagnetgeometrie zu schaffen, dem in günstiger Weise Strom gleichzeitig zuführbar und entnehmbar ist.

Zur Lösung dieser Aufgabe ist der Rotationsenergiespeicher erfindungsgemäß so aufgebaut, wie im kennzeichnenden Teil des Anspruchs 1 angegeben.

Die Stromleiter, die auch in Form von Spulen vorgesehen sein können, bilden zusammen mit den Dauermagneten eine elektrische Maschine, die je nach Beaufschlagung als Elektromotor oder als Generator arbeiten kann. Zugeführte elektrische Leistung wird als mechanische Rotationsenergie des Rotors gespeichert. Beim Abführen elektrischer Leistung wird dem Rotor mechanische Rotationsenergie entzogen.

Der Aufbau des Elektromotors bzw. Generators mit Dauermagneten führt zu einem besonders einfachen Aufbau.

Bei der Erfindung werden bevorzugt hochkoerzitive Dauermagnete aus einer Legierung eines Elements aus der Gruppe der seltenen Erden, insbesondere Samarium, mit Kobalt eingesetzt. Solche Magnete erlauben es, mit vergleichsweise großen Spaltweiten zu arbeiten. Sie zeichnen sich ferner durch eine praktisch gerade Kennlinie im vierten Quadranten aus, wodurch sie gegen Spaltweitenänderungen und Gegenfelder, beispielsweise durch Elektromagnete, relativ unempfindlich sind.

Vorzugsweise ist der erfindungsgemäße Rotationsenergiespeicher selbststeuernd ausgebildet, d.h. daß mindestens ein am mit den Stromleitern gebildeten Stator vorgesehener Sensor die Relativstellung von Stator und mit den Dauermagneten gebildetem Läufer erfaßt und daß eine von dem Sensor gesteuerte, elektronische, Schalteinrichtung bei antriebsgerechter bzw. generatorgerechter Relativstellung von Stator und Läufer eine elektrische Verbindung zwischen den Stromleitern und einer Stromquelle bzw. Stromsenke herstellt.

Bevorzugte Ausgestaltungen der Erfindung ergeben sich aus den Ansprüchen 2 bis 7. Die Ausbildung der Stromleiter ohne Eisenkern vermindert die Verluste. Die Anbringung von Dauermagneten an einer Innenumfangsfläche des Rotors führt dazu, daß diese Dauermagnete durch die Fliehkraft gegen die Anbringungsfläche gedrückt werden, so daß sich deren Befestigung weniger aufwendig gestaltet. Man kann den Rotationsenergiespeicher gleichzeitig laden und entladen. Die Maßnahme gemäß Anspruch 4 führt zu einer Verringerung der Reibungsverluste in der Lagerung des Rotors und zu einer wesentlichen Lebensdauererhöhung der Lagerung. Die besonders bevorzugte Ausgestaltung gemäß Anspruch 5 vermindert die Luftreibungsverluste des Rotors entscheidend, insbesondere bei den anzustrebenden hohen Drehzahlen.

Man kann auch auf radial beiden Seiten der Stromleiter Dauermagnete anordnen.

Bei Antriebsbetrieb des Rotors werden durch die genannte Selbststeuerung den Stromleitern zeitrichtig und vorzeichenrichtig Stromstöße zugeführt. Bei Generatorbetrieb kann man die durch Drehung des Rotors in den Stromleitern induzierte Spannung beispielsweise als Wechselspannung entnehmen, dann gleichrichten und dann, wenn gewünscht, wieder in eine Wechselspannung gewünschter Frequenz wechselrichten. Somit ist sowohl das Zuführen als auch das Abführen elektrischer Leistung unabhängig von der jeweiligen Drehzahl des Rotors möglich.

Die Stromleiter können auch als in Vergußmasse eingebettete Leiter bzw. Spulen verwirklicht werden, wobei vorzugsweise eine ein ferromagnetisches Pulver enthaltende Vergußmasse Verwendung findet.

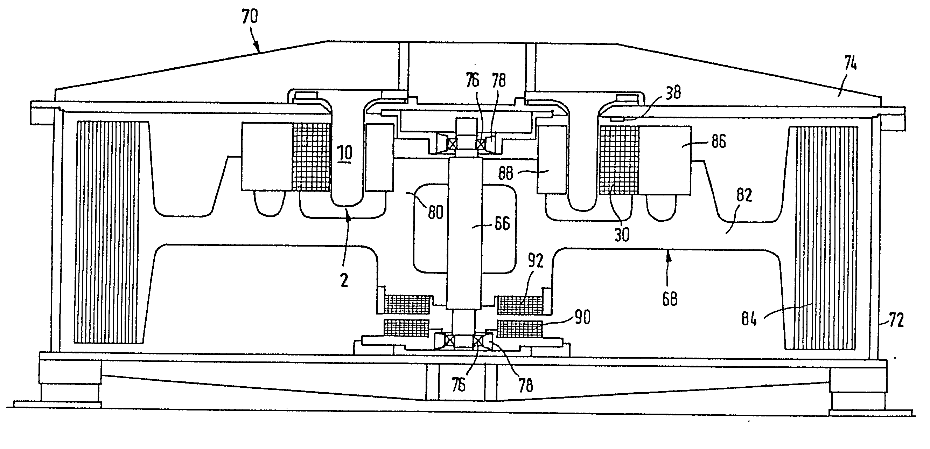

Die Erfindung wird im folgenden anhand eines schematisch dargestellten Ausführungsbeispiels noch näher erläutert. Die einzige Figur zeigt einen Rotationsenergiespeicher mit vertikaler Achse, dessen Rotor als Schwungrad ausgebildet ist.

Die Figur zeigt einen Rotationsenergiespeicher mit vertikaler Achse 66, mit der ein Schwungrad 66 rotieren kann. Das Schwungrad ist in einem evakuierten, druckfesten Gehäuse 70 angeordnet. Das Gehäuse 70 besteht aus einem topfförmigen Unterteil 72 und einem mit dem Unterteil 72 abgedichtet verschraubten, deckelartigen Oberteil 74. Die vertikale Achse 66 ist im Unterteil 72 sowie im Oberteil 74 mit Hilfe von Wälzlagern 76 gelagert, die ihrerseits über elastische Zwischenlagen 78 im jeweiligen Gehäuseteil aufgenommen sind.

Das Schwungrad 68 weist eine mit der Achse 66 verbundene Nabe 80, einen radial von dort nach aussen führenden, scheibenartigen Bereich 82, sowie einen axial vergrösserten Schwungmassenbereich 84 auf. Die Schwungmasse 84 besteht sinnvollerweise aus einem spezifisch schweren Material, beispielsweise Stahl, wobei auch Wicklungen aus Stahlseilen mit Kunststoffüllung in Betracht kommen. Für das restliche Schwungrad 68 kommen neben Metall auch Kunststoffwerkstoffe insbesondere faserverstärkte Kunststoffwerkstoffe beispielsweise durch Glasfasern, Karbonfasern und dergleichen verstärkte Kunststoffwerkstoffe in Betracht.

Der Scheibenbereich 82 trägt auf seiner Oberseite einen Ring 86 aus ferromagnetischem Material. Am Innenumfang des Rings 86 ist eine Reihe von Dauermagneten 30 mit wechselnder Polung ringförmig verteilt angeordnet. Die Dauermagnete 30 werden also durch die Fliehkraft gegen den Ring 86 gepresst. Radial innerhalb der Dauermagnete 30 unter Freilassung eines Ringspalts ragt vom Deckeloberteil 74 her nach unten ein Ring vertikal angeordneter Stromleiter 10 ohne Eisenkern, die z.B. in der vorn beschriebenen Weise als vergussmassengefüllte Leiter oder Spulenanordnungen ausgeführt sind. Diese bilden den funktionellen Teil des Stators 2. Die Spulen haben je zwei vertikale Äste, die durch waagerechte, im wesentlichen ringförmig gekrümmte Äste miteinander verbunden sind. Radial innen von dem Ring von Stromleitern 10 oder Spulen befindet sich unter Freilassung eines Ringspalts und vom Scheibenbereich 82 getragen ein Rückschlussring 88. Auf diese Weise ist ein Antrieb und Generator gebildet.

Der Stator 2 oder das Deckeloberteil 74 trägt eine oder ringförmig verteilt mehrere Hallsonden 38, die mit den Dauermagneten 30 zusammenwirken. Sobald hallsondenseitig festgestellt wird, dass sich ein läuferseitiger Teil und ein statorseitiger Teil eines magnetischen Kreises oder mehrerer magnetischer Kreise in antriebsgerechter bzw. generatorgerechter Relativlage befinden, wird der Stromleiter bzw. die Spule oder werden die Stromleiter bzw. die Spulen dieses Kreises bzw. dieser Kreise selbsttätig eingeschaltet.

Der Statorring kann insgesamt von einer einzigen Schalteinrichtung geschaltet sein oder in mehrere Abschnitte mit jeweils einer Schalteinrichtung aufgeteilt sein, wobei ein Stromleiterpaar bzw. eine Spule den unteren Grenzfall eines Abschnittes darstellt.

Es können zwei elektronische Steuerungen vorgesehen werden, nämlich eine für die «Antriebsfunktion» = Drehzahlerhöhung des Schwungrades 68 durch Zuführung elektrischer Energie und eine für die «Generatorfunktion» = Drehzahlerniedrigung des Schwungrades 68 durch Abziehen elektrischer Energie. Auf diese Weise kann man also elektrische Energie synchron zur jeweiligen Drehzahl des Schwungrades 68 zuführen und kann dem Schwungradspeicher elektrische Energie mit einer Frequenz entnehmen, die nicht notwendigerweise in einem festen Verhältnis zur Schwungraddrehzahl steht. Für viele Einsatzzwecke kann es aber auch ausreichen, die elektrische Energie einfach mit der gerade gegebenen Frequenz ohne elektronische Steuerung zu entnehmen und beispielsweise den gelieferten Wechselstrom gleichzurichten. Die Auslegung ist so getroffen, dass der Stator 2 zwei getrennte Stromleitersysteme enthalt, nämlich eines zur Stromzuführung und eines zur Stromentnahme, beispielsweise das eine Stromleitersystem in einem axial oberen Bereich und das andere Stromleitersystem in einem axial unteren Bereich des Ringspalts zwischen den Dauermagneten 30 und dem Rückschlussring 88. Bei einer solchen Auslegung ist es möglich, gleichzeitig dem Schwungradspeicher elektrische Energie zuzuführen und ihm elektrische Energie zu entnehmen, wobei sich die Frequenzen des Speisungstroms und des Entnahmestroms unterscheiden können. Ausserdem kann man die Stromleitersyteme auf die Speisungs- und Entnahmefunktion gezielt auslegen, beispielsweise besonders niederohmige Entnahmewicklungen für kurzzeitige Entnahme von Strömen hoher Stromstärke vorsehen. Bei hohen Drehzahlen des Schwungrades 68 empfiehlt es sich, die Stromleiter in hochfrequenzgeeigneter Weise zur Vermeidung des Skineffektes vorzusehen.

Die vertikale Lagerung des Schwungrades 68 erfolgt im gezeigten Ausführungsbeispiel durch abstossende Dauermagnete. Zu diesem Zweck sind mehrere Dauermagnete 90 ringförmig verteilt am Boden des Gehäuseunterteils 72 angeordnet. Gegenüber diesen Dauermagneten 90 befinden sich mehrere Dauermagnete 92 ringförmig verteilt an der unteren Stirnfläche der Nabe 80. Eine Aufnahme des Gewichts des Schwungrades 68 durch anziehende Dauermagnete ist ebenfalls möglich. In der Dauermagnetlagerung kann man einen Präzessionsausgleich gegen die Erddrehungspräzession vorsehen. Statt der Radiallagerung mit Wälzlagern ist auch eine Lagerung mit Hilfe von Elektromagneten, die in ihrer Magnetkraft änderbar sind, durchführbar.

Die Radiallagerung erfolgt vorzugsweise überkritisch hinsichtlich möglicher radialer Schwingungen.

Es lassen sich mehrere der beschriebenen Rotationsenergiespeicher zu Speicherbatterien zusammenfassen. Insbesondere bei solchen Speicherbatterien kann man so hohe Speicherleistungen erreichen, dass die Speicherbatterie sogar anstelle eines Pumpspeicherwerks eingesetzt werden kann. An weiteren Anwendungsgebieten seien genannt: Notstromaggregat, Spitzenbedarfsausgleich für Verkehrssysteme, Leistungspuffer im Zusammenhang mit Wind- oder Sonnenenergieanlagen.

Man kann die Achse 66 als Hohlachse ausbilden und durch diese hindurch eine Druckstütze zwischen dem Gehäuseunterteil 72 und dem Gehäuseoberteil 74 vorsehen.

Insbesondere wenn das Schwungrad 68 axial weniger hoch ist als in der Figur dargestellt, lassen sich für das Gehäuseunterteil 72 und das Gehäuseoberteil 74 vergleichsweise preisgünstig verfügbare Ronden aus dem Druckkesselbau einsetzen, die eine im wesentlichen schalenförmige Gestalt haben.

## Patentansprüche

1. Rotationsenergiespeicher, bei dem der Rotor (68) an einer Innenumfangsfläche mit ringförmig verteilten Dauermagneten (30) besetzt ist und bei dem gegenüber den Dauermagneten (30) mit Luftspaltabstand als Statorwicklung ohne Eisenkern ausgebildete Stromleiter (10) derart angeordnet sind, daß mit den Dauermagneten (30) ein Elektromotor und ein elektrischer Generator gebildet sind wobei die Stromleiter (10) in einem Ringraum zwischen den radial äußeren Dauermagneten und einem radial inneren, mitrotierenden Magnetfluß-Rückschlußring (88) angeordnet sind und wobei eine elektronische Einrichtung zum Schalten der Stromleiter (10) vorgesehen ist,

dadurch gekennzeichnet daß für Antriebsbetrieb des Rotors (68) und für Generatorbetrieb des Rotors (68) jeweils gesonderte Stromleiter (10) vorgesehen sind und daß die elektronische Einrichtung so ausgebildet ist, daß die gesonderten Stromleiter (10) gleichzeitig betrieben werden können.

2. Rotationsenergiespeicher nach Anspruch 1, dadurch gekennzeichnet, daß die Stromleiter (10) für Antriebsbetrieb des Rotors (68) und die Stromleiter (10) für Generatorbetrieb des Rotors (68) in axial unterschiedlichen Bereichen angeordnet sind.

3. Rotationsenergiespeicher nach Anspruch 1 oder 2, dadurch gekennzeichnet, daß der Rotor (68) unter Einbeziehung von Wälzlagern (76) gelagert ist, die vorzugsweise über radial elastische Zwischenlagen (78) abgestützt sind.

4. Rotationsenergiespeicher nach einem der Ansprüche 1 bis 3, gekennzeichnet durch eine Dauermagnetlagerung (90, 92) des Rotors (68) in Axialrichtung.

5. Rotationsenergiespeicher nach einem der Ansprüche 1 bis 4, dadurch gekennzeichnet, daß der Rotor (68) in einem evakuierbaren, druckfesten Gehäuse (70) angeordnet ist.

6. Rotationsenergiespeicher nach Anspruch 5, dadurch gekennzeichnet, daß zwischen einem Gehäuseunterteil (72) und einem Gehäuseoberteil (74) eine Druckstütze vorgesehen ist, die durch die hohle Achse (66) des Rotors (68) führt.

7. Rotationsenergiespeicher nach einem der Ansprüche 1 bis 6, dadurch gekennzeichnet, daß die Dauermagnete (30) aus einer Legierung eines Elements aus der Gruppe der seltenen Erden, insbesondere Samarium, mit Kobalt bestehen.

## Revendications

1. Accumulateur d'énergie de rotation, dans lequel le rotor (68) comporte, sur une surface périphérique intérieure, des aimants permanents (30) répartis annulairement et dans lequel des conducteurs (10) réalisés sous la forme d'enroulement de stator sans noyau de fer sont placés en face des aimants permanents (30) en laissant un entrefer de telle façon qu'un moteur électrique et un générateur électrique sont formés avec les aimants permanents (30), les conducteurs (10) étant placés dans un intervalle annulaire compris entre les aimants permanents radialement extérieur et un anneau de retour de flux magnétique (88) radialement intérieur tournant en même temps et un agencement électronique de commutation des conducteurs (10) étant prévu, caractérisé en ce que des conducteurs séparés (10) correspondant respectivement au fonctionnement en moteur du rotor (68) et au fonctionnement en générateur du rotor (68) sont prévus, et que l'agencement électronique est constitué de telle manière que les conducteurs séparés (10) peuvent être utilisés simultanément.

2. Accumulateur d'énergie de rotation selon la revendication 1, caractérisé en ce que les conducteurs (10) correspondant au fonctionnement en moteur du rotor (68) et les conducteurs (10) correspondant au fonctionnement en générateur du rotor (68) sont placés dans des zones axialement distinctes.

3. Accumulateur d'énergie de rotation selon l'une des revendications 1 et 2, caractérisé en ce que l'appui du rotor (68) est réalisé au moyen d'un ensemble d'appui comprenant des rouleaux (76) supportés, de préférence, au moyen de couches intermédiaires (78) radialement élastiques.

4. Accumulateur d'énergie de rotation selon l'une des revendications 1 à 3, caractérisé en ce que l'appui du rotor (68) en direction axiale comprend des aimants permanents (90, 92).

5. Accumulateur d'énergie de rotation selon l'une des revendications 1 à 4, caractérisé en ce que le rotor (68) est placé dans un boîtier (70) étanche, dans lequel on peut faire le vide.

6. Accumulateur d'énergie de rotation selon la revendication 5, caractérisé en ce qu'un montant d'appui passant par l'axe creux (66) du rotor (68) est placé entre une partie inférieure (72) et une partie supérieure (74) du boîtier.

7. Accumulateur d'énergie de rotation selon l'une des revendications 1 à 6, caractérisé en ce que les aimants permanents (30) sont constitués par un alliage d'un élément du groupe des terres rares, notammment le samarium, avec du cobalt.

## Claims

1. A rotary energy storage unit, in which the rotor (68) is provided with annularly distributed permanent magnets (30) on an inner circumferential area and in which, under formation of an air gap with respect to said permanent magnets (30), current conductors (10) designed as a stator coil without an iron core are disposed such that an electric motor and an electric generator are formed together with said permanent magnets (30), the current conductors (10) being disposed in an annular space between the radially outer permanent magnets and a radially inner, concomitantly rotating magnetic-flux return path ring (88), and an electronic means being provided for switching said current conductors (10), characterized in that separate current conductors (10) each are provided for the driving mode of said rotor (68) and for the generator mode of said rotor (68), and in that said electronic means is designed such that said separate current conductors (10) may be operated simultaneously.

2. A rotary energy storage unit according to claim 1, characterized in that said current conductors (10) for said driving mode of said rotor (68) and said current conductors (10) for said generator mode of said rotor (68) are disposed in axially differring portions.

3. A rotary energy storage unit according to claim 1 or 2, characterized in that said rotor (68) is supported with the aid of roller bearings (76) which are preferably supported via radially elastic intermediate layers (78).

4. A rotary, energy storage unit according to any one of claims 1 to 3, characterized by a permanent magnet support (90, 92) of said rotor (68) in the axial direction.

5. A rotary energy storage unit according to any one of claims 1 to 4, characterized in that said rotor (68) is disposed in an evacuateable, pressure-proof housing (70).

6. A rotary energy storage unit according to claim 5, characterized in that a pressure support is provided between a lower housing part (72) and an upper housing part (74), said pressure support extending through the hollow axle (66) of said rotor (68).

7. A rotary energy storage unit according to any one of claims 1 to 6, characterized in that said permanent magnets (30) consist of an alloy of an element of the group of the rare earths, in particular samarium, and cobalt.